# EUROPEAN PATENT APPLICATION

(11) **EP 2 093 017 A1**
(43) Date of publication of application: **26.08.2009**
(21) Application number: 08720684.3
(22) Date of filing: 31.03.2008
(51) Int. Cl.: B23Q 5/04, B23Q 5/12, B23Q 5/14

(54) **SWITCH-TYPE ROTARY DRIVING DEVICE**

(30) Priority: 06.12.2007 JP 2007315685
(71) Applicant: Harmonic Ad, Inc., Azumino-shi Nagano 399-8205 (JP)
(72) Inventor: SHIROKOSHI, Norio, Azumino-shi Nagano 399-8205 (JP)
(74) Representative: Klunker . Schmitt-Nilson . Hirsch
(86) International application number: PCT/JP2008/000818
(87) International publication number: WO 2009/072223

(57) **Abstract**

A switchable rotation drive device (1) has a switching mechanism (6) wherein a first connecting sleeve (61) that always rotates integrally with a motor hollow rotor (3), and a second connecting sleeve (61) that always rotates integrally with a planetary carrier (53) of a planetary gear reduction mechanism (5) are connected via a bearing (63) in a relatively rotatable state, and the first connecting sleeve (61) is formed with a sun gear (51). By sliding the switching mechanism (6), the output shaft can be switched between high-speed rotation and low-speed rotation. In comparison to a case in which the entirety of the planetary gear reduction mechanism (5) is made to slide, the sliding region may be smaller, and the required space needed to allow sliding may also be smaller. Therefore, it is advantageous to reduce the size of the device and make it more compact.

## Description

### TECHNICAL FIELD

The present invention relates to a switchable rotation drive device that is capable of switching between a high-speed rotating mode, in which an output shaft is directly connected to a motor; and a low-speed rotating mode in which the output shaft is connected to the motor via a reduction mechanism.

### BACKGROUND ART

A reducer is used to reduce the rotation of an output shaft and increase torque; however, when it is desired that the output shaft is made to rotate at a high speed and the speed of movement of a driven object is to be increased, or in other circumstances, a switching mechanism is used, and the rotation of the motor is transmitted directly to the output shaft. A spindle driving device for a machine tool, as disclosed in patent document 1, is known as a rotating drive device provided with a switching mechanism.

According to the spindle driving device for a machine tool as disclosed in patent document 1, a power train unit having a planetary gear mechanism for use in speed reduction is made to slide in the direction of the center axis of a spindle shaft, so that switching between a high-speed rotating mode and a low-speed rotating mode of the spindle shaft is accomplished. Specifically, a power train unit is slidably provided on an outer periphery of the spindle shaft, which protrudes rearward from a rear end of a hollow rotor of a spindle motor. When the power train unit is made to slide to a forward position, the spindle shaft is directly connected to the hollow rotor and reaches a state of high-speed rotation. When the power train unit is made to slide to a rearward position, the planetary gears of the power train unit mesh with a sun gear that integrally rotates with the hollow rotor, and a planetary carrier of the power train unit links to a rear end part of the spindle shaft that protrudes rearward from the rear part of the hollow rotor. The spindle shaft is switched to a state of low-speed rotation via the planetary gear mechanism.
[Patent document 1] Japanese Patent No. 3963517

However, according to the switch mechanism disclosed in patent document 1, the power train unit that has a planetary gear mechanism must be moved longitudinally with respect to the spindle shaft. Since the entirety of the power train unit moves longitudinally, the dimensions of the device are inevitably increased to ensure space for the movement.

In particular, the power train unit that slides longitudinally is disposed on an outer periphery of the rear end part of the spindle shaft that protrudes from the rear end of the hollow rotor, and a linking part for linking the spindle shaft with the planetary gears of the power train unit is disposed on the rear end part of the spindle shaft that protrudes rearward from the rear end of the power train unit. The power train unit and the linking part are thus arranged in the axial direction, whereby the shaft length is inevitably increased.

Furthermore, since the entirety of the power train unit that has the planetary gear mechanism is made to slide, the mechanism for causing the power train unit to slide also inevitably increases in scale.

### DISCLOSURE OF THE INVENTION

An object of the present invention that takes the above points into account is to provide a switchable rotation drive device having a small, compact configuration.

In order to resolve the issues described above, a switchable rotation drive device according to the present invention, characterized in comprising:
a motor provided with a hollow rotor;
an output shaft that coaxially pass through a hollow part of the hollow rotor in a rotatable state;
a planetary gear reduction mechanism for reducing the rotation of the hollow rotor and transmitting the resulting rotation to the output shaft;
and a switching mechanism that can slide between a high-speed mode position and a low-speed mode position in the direction of a center axis along an outer peripheral surface of the output shaft, wherein
the switching mechanism is provided with a first connecting sleeve in which a sun gear of the planetary gear reduction mechanism is formed on the outer periphery thereof, and a second connecting sleeve that is coaxially attached via a bearing to the first connecting sleeve in a rotatable state;
in the high-speed mode position, the output shaft and the hollow rotor form a connected state so as to integrally rotate via the first connecting sleeve; and
in the low-speed mode position, the first connecting sleeve and the output shaft are unconnected, the first connecting sleeve is connected to a planetary gear of the planetary gear reduction mechanism, the second connecting sleeve is connected to a planetary carrier, which is an element of the planetary gear reduction mechanism for outputting reduced rotation, and the rotation of the hollow rotor is reduced via the planetary gear reduction mechanism and transmitted to the output shaft.

In the present invention, only the first connecting sleeve that constitutes the switching mechanism and the second connecting sleeve attached to the first connecting sleeve via a bearing are made to slide, whereby the output shaft can switch between high-speed rotation and low-speed rotation. In comparison to a conventional switching mechanism, in which the entirety of the planetary gear reduction mechanism is made to slide, the sliding region may be smaller, and the required space needed to allow sliding may also be smaller. Therefore, it is advantageous to reduce the size of the device and make it more compact.

In the present invention, the first connecting sleeve may be connected to the hollow rotor so as to integrally rotate in a slidable state in the direction of the center axis, a first spline groove may be formed on a circular inner peripheral surface of the first connecting sleeve, and a first spline may be formed on an outer peripheral surface of the output shaft, wherein in the high-speed mode position, the first spline groove and the first spline are connected, and in the low-speed mode position, the first spline groove and the first spline are separated.

In this case, a second connecting sleeve is connected to the planetary carrier so as to integrally rotate in a state that allows sliding in the direction of the center axis, a second spline groove is formed on a cylindrical inner peripheral surface of the second connecting sleeve, and a second spline is formed on an outer peripheral surface of the output shaft; wherein in the high-speed mode position, the second spline groove and the second spline are separated; and in the low-speed mode position, the second spline groove and the second spline are made to be connected.

It is desirable for the second spline and the second spline groove to be connected while the first spline and the first spline groove are disconnected because a state in which the output shaft is not connected to the hollow rotor or the planetary gear reduction mechanism will substantially not occur when the switching mechanism slides (during switching).

Moreover, it is desirable when the output shaft is made to protrude rearward from the rear end of the hollow rotor, and the planetary gears of the planetary gear reduction mechanism are disposed in a state surrounding the output shaft in a position adjacent to the rear side of the rear end of the output shaft; in the high-speed mode position, the sun gear of the first connecting sleeve is concealed in the hollow rotor, and in the low-speed mode position, the sun gear is exposed rearward from the rear end of the hollow rotor, and the sun gear meshes with the planetary gears. Such an arrangement makes it possible to use some of the sliding range of the switching mechanism for the hollow part of the hollow rotor, which will allow the length of the shaft of the device to be reduced by a corresponding amount.

A switchable rotation drive device of the present invention according to another aspect of the present invention, characterized in comprising: a motor provided with a hollow rotor; an output shaft that coaxially enters into a hollow part of the hollow rotor in a rotatable state; a planetary gear reduction mechanism for reducing the rotation of the hollow rotor and transmitting the resulting rotation to the output shaft; and a switching sleeve that can slide between a high-speed mode position and a low-speed mode position in the direction of a center axis along an outer peripheral surface of the output shaft and that is connected so as to integrally rotate with the output shaft; wherein a sun gear of the planetary gear reduction mechanism is disposed so as to integrally rotate with the hollow rotor, and the switching sleeve is provided with a first linking part linked to the hollow rotor so as to integrally rotate therewith merely in the high-speed mode position; and a second linking sleeve that is connected to a planetary carrier so as to integrally rotate therewith merely in the low-speed rotation mode position, the planetary carrier being an element of the planetary gear reduction mechanism for outputting reduced rotation.

In the present invention, causing only the switching sleeve to slide allows the output shaft to be switched between high-speed rotation and low-speed rotation, and an extremely simple switching mechanism to be obtained. Therefore, it is advantageous to reduce the size of the device and make it compact.

### BRIEF DESCRIPTION OF THE DRAWINGS

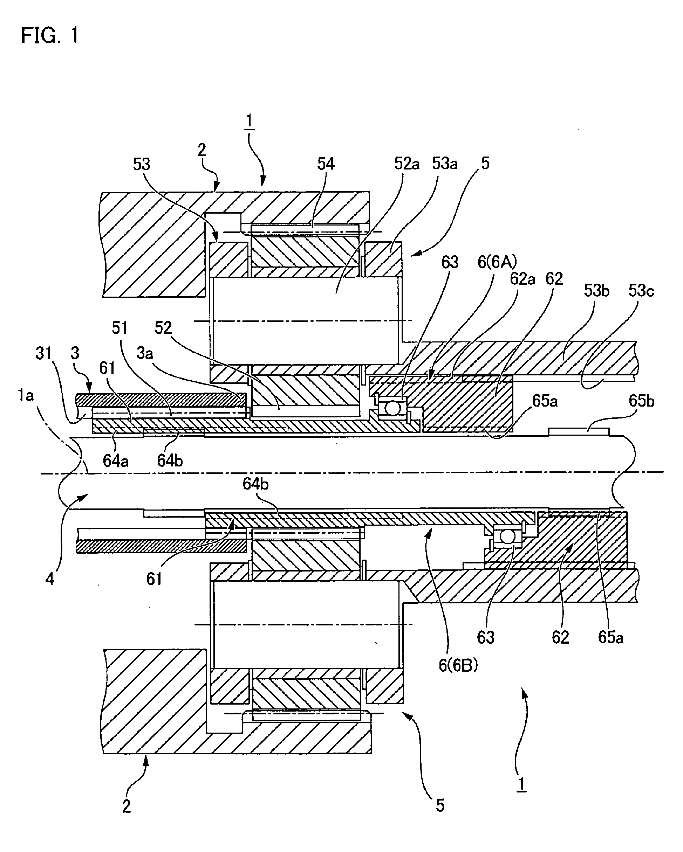

FIG. 1 is a schematic diagram that shows a switchable rotation drive device according to a first embodiment of the present invention, that shows a state in which a switching mechanism is in a position for high-speed mode in the upper half part, and that shows a state in which the switching mechanism is in a position for low-speed mode in the lower half part.

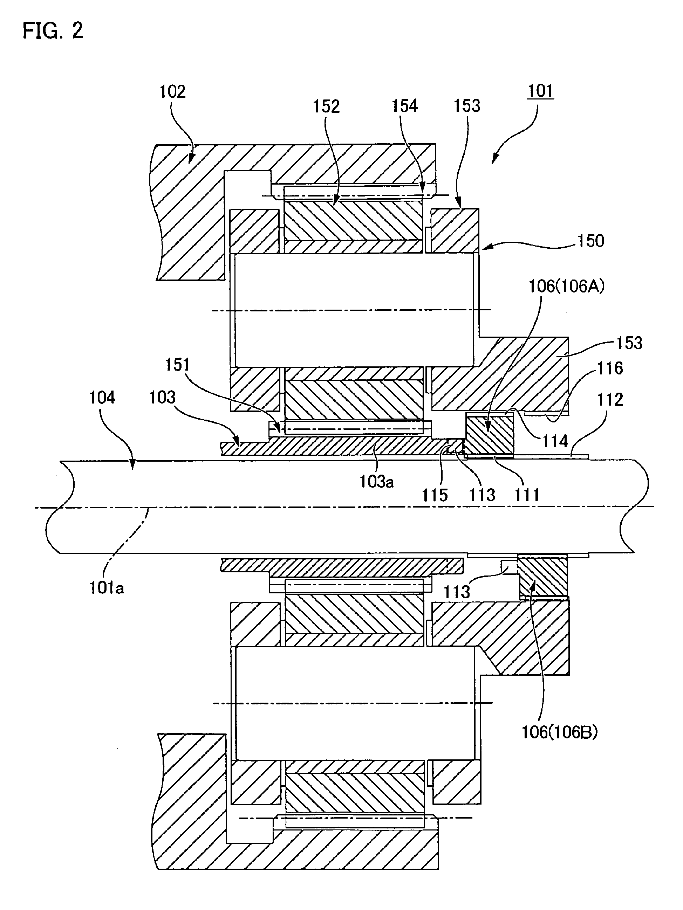

FIG. 2 is a schematic configuration diagram that shows a switchable rotating drive device according to a second embodiment of the present invention, that shows a state in which a switch sleeve is in a position for high-speed mode in the upper half part, and that shows a state in which the switch sleeve is in a position for low-speed mode in the lower half part.

### BEST MODE FOR CARRYING OUT THE INVENTION

An embodiment of a switchable rotating drive device in which the present invention is used will be described below with reference to the attached drawings.

### (Embodiment 1)

FIG. 1 is a schematic configuration diagram that primarily shows a switching device of a switchable rotating drive device according to an embodiment of the present invention. In the drawing a state in which a switching mechanism is in a position for high-speed mode is shown in the upper half part, and a state in which the switching mechanism is in a position for low-speed mode is shown in the lower half part.

A switchable rotation drive device 1 has a motor (not shown in the drawing) provided with a hollow rotor 3 that is incorporated in a cylindrical device housing 2; an output shaft 4 that rotatably extends through a hollow part of the hollow rotor 3 in a coaxial state; a planetary gear reduction mechanism 5 disposed on a part of the output shaft 4 that protrudes rearward from a rear end 3a of the hollow rotor 3; and a switching mechanism 6 for switching the output shaft 4 to a state for high-speed rotation or low-speed rotation.

For example, when used in a spindle driving device for a machine tool, the switchable rotation drive device 1 according to a first embodiment is configured having a spindle motor (not shown in the drawing) provided with a hollow rotor (3) that is incorporated in a spindle housing (2); a spindle shaft (4) that extends and rotatably enters into a hollow part of the hollow rotor (3) in a coaxial state; a cutting tool or other working tool directly connected to the distal end of the spindle shaft (4) or attached via an implement for attaching tools; a planetary gear reduction mechanism (5) disposed on a part that protrudes rearward from a rear end (3a) of the hollow rotor (3) in the spindle shaft (4); and a switching mechanism (6) for switching the spindle shaft (4) to a state for high-speed rotation or low-speed rotation.

The switching mechanism 6 of the switchable rotation drive device 1 is capable of sliding between a high-speed mode position 6A (state shown in the upper part of FIG. 1) in a forward direction along a center axis 1a of the output shaft 4, and a low-speed mode position 6B in a rearward direction (state shown in the lower part of FIG. 1). In the high-speed mode position 6A, the output shaft 4 is connected to the hollow rotor 3 via the switching mechanism 6, and rotates at a high speed. In the low-speed mode position 6B, the output shaft 4 is connected to the hollow rotor 3 via the switching mechanism 6 with the planetary gear reduction mechanism 5 interposed therebetween, and is made to rotate at a low speed.

The switching mechanism 6 is provided with a first connecting sleeve 61 and a second connecting sleeve 62 coaxially attached via a bearing 63 on a rear end of the first connecting sleeve 61 in a rotatable state. A sun gear 51 of the planetary gear reduction mechanism 5 is formed on an outer peripheral surface of the first connecting sleeve 61. In the high-speed mode position 6A, the output shaft 4 is directly connected to the hollow rotor 3 via the first connecting sleeve 61 so as to integrally rotate. In the low-speed mode position 6B, the first connecting sleeve 61 and the output shaft 4 are disconnected, and the sun gear 51 of the first connecting sleeve 61 meshes with planetary gears 52 of the planetary gear reduction mechanism 5; the second connecting sleeve 62 is connected with a planetary carrier 53, which is an element of the planetary gear reduction mechanism 5 for outputting reduced rotation, and the rotation of the hollow rotor 3 is reduced via the planetary gear reduction mechanism 5 and transmitted to the output shaft 4.

The first connecting sleeve 61 is connected to an inner peripheral surface part of the rear end part of the hollow rotor 3 so as to integrally rotate in a state that allows sliding in the direction of the center axis 1a. In the present embodiment, the sun gear 51 is formed on a front half of the outer peripheral surface of the first connecting sleeve 61 in the axial direction, and a connecting inner tooth 31 that meshes with the sun gear 51 in a slidable state is formed on an inner peripheral surface part of the rear end part of the hollow rotor 3. Additionally, a first spline groove 64a is formed on a circular inner peripheral surface of the first connecting sleeve 61, and a first spline 64b is formed on the outer peripheral surface that opposes an inner peripheral surface part of a rear end part of the hollow rotor 3 on the output shaft 4. In the high-speed mode position 6A, the first spline groove 64a and the first spline 64b mesh together and form a connected state wherein both can rotate in an integrated manner. In the low-speed mode position 6B, the first spline groove 64a slides to a rearward position separated from the first spline 64b, and is disconnected therefrom.

The second connecting sleeve 62 is connected to the planetary carrier 53 so as to integrally rotate in a state that allows sliding in the direction of the center axis 1a. In the present embodiment, the planetary carrier 53 is provided with a cylinder part 53b protruding rearward from a disk-shaped rear-side flange 53a, which supports a planetary shaft 52a that rotatably supports the planetary gears 52; and a spline 53c is formed on an inner peripheral surface part of the cylinder part 53b. A spline groove 62a is formed on an outer peripheral surface of the second connecting sleeve 62. The spline 53c is enmeshed with the spline 62a in a slidable state.

Additionally, a second spline groove 65a is formed on the circular inner peripheral surface of the second connecting sleeve 62, and a second spline 65b is formed on the outer peripheral surface part of the output shaft 4. In the high-speed mode position 6A on the forward side, the second spline groove 65a is positioned forward, separated from the second spline 65b, and the second spline groove 65a and the second spline 65b are disconnected. In the low-speed mode position 6B, the second spline groove 65a meshes with the second spline 65b and the second spline groove 65a and the second spline 65b become disconnected.

The planetary gears 52 of the planetary gear reduction mechanism 5 are disposed at equiangular intervals around the output shaft 4 in a position adjacent to the rear side with respect to the rear end 3a of the hollow rotor 3. The planetary gears 52 are enmeshed with inner teeth 54 formed on an inner peripheral surface part of the device housing 2. When the switching mechanism 6 is in the high-speed mode position 6A, the sun gear 51 of the first connecting sleeve 61 is substantially concealed from the rear end 3a of the hollow rotor 3 in the interior of the first connecting sleeve 61, and is separated in the forward direction from the planetary gears 52. When the switching mechanism 6 switches to the low-speed mode position 6B, the sun gear 51 is exposed rearward from the rear end 3a of the hollow rotor 3, and forms a meshed state with the planetary gears 52.

As described above, in the switchable rotation drive device 1 of the embodiment of the present invention, the switching mechanism 6 is configured so that the first connecting sleeve 61, which integrally rotates constantly with the hollow rotor 3 of the motor, and the second connecting sleeve 62, which integrally rotates constantly with the planetary carrier 53 of the planetary gear reduction mechanism 5, are connected in a relatively rotatable state via the bearing 63; and the sun gear 51 is formed on the first connecting sleeve 61. Additionally, the switching mechanism 6 in this configuration is made to slide, whereby the output shaft 4 can accordingly switch between high-speed rotation and low-speed rotation.

Therefore, in comparison with a case in which the entirety of the planetary gear reduction mechanism 5 is made to slide and switch between high-speed rotation and low-speed rotation, the sliding region may be smaller, and as a result, the movement space is also accordingly smaller. It is therefore advantageous to reduce the size of the device and make it compact.

### (Embodiment 2)

FIG. 2 is a schematic configuration diagram that shows a switching mechanism in a switchable rotating drive device according to a second embodiment in which the present invention is applied. In the diagram, a state in which a switch mechanism is in a position for high-speed mode is shown in the upper half part, and a state in which the switch mechanism is in a position for low-speed mode is shown in the lower half part.

The entire configuration of a switchable rotation drive device 101 is similar to the first embodiment. [The switchable rotation drive device 101] has a motor (not shown in the diagram) provided with a hollow rotor 103 that is incorporated in a device housing 102; an output shaft 104 that extends and rotatably passes through a hollow part of the hollow rotor 103 in a coaxial state; a planetary gear reduction mechanism 150 disposed on a part that protrudes rearward from a rear end 103a of the hollow rotor 103 in the output shaft 104; and a switching sleeve 106 for switching the output shaft 104 to a state for high-speed rotation or low-speed rotation. The planetary gear reduction mechanism 150 is provided with a sun gear 151 integrally formed on the outer peripheral surface of the rear end part of the hollow rotor 103, a plurality of planetary gears 152 that surround the sun gear 151, a planetary carrier 153 that supports the planetary gears 152 in a rotatable state, and inner teeth 154 formed on a circular inner peripheral surface of a rear end part of the device housing 102.

The switching mechanism 106 is capable of sliding in the direction of a center axis 101a of the output shaft 104 between a high-speed mode position 106A in the forward direction, and a low-speed mode position 6B in the rear direction. In the high-speed mode position 106A, the output shaft 104 is connected to the hollow rotor 103 via the switching mechanism 106, and rotates at a high speed. In the low-speed mode position 106B, the output shaft 104 is connected to the hollow rotor 103 via the switching mechanism 106 and rotates at a low speed via the planetary gear reduction mechanism 150.

A spline groove 111 is formed on an inner peripheral surface of the switching sleeve 106 of the present embodiment, and is slidably enmeshed with a spline 112, which has been formed on an outer peripheral surface of a part that protrudes rearward from a rear end part 103a on the hollow rotor 103 on the output shaft 104. Additionally, the switching sleeve 106 is provided with a first linking part 113 linked to the hollow rotor 103 so as to integrally rotate merely in a high-speed mode position 106A, and a second linking part 114 linked to the planetary carrier 153[so as to integrally rotate] only in a low-speed mode position 106B, the planetary carrier being an element of the planetary gear reduction mechanism 150 for outputting reduced rotation.

The first linking part 113 has linking teeth that protrude forward from a front-side toric end surface of the switching sleeve 106, and the linking teeth are formed at a fixed pitch in the circumferential direction of the toric-shaped end surface. Linking teeth 115 that can mesh with the first linking part 113 are formed on a toric rear end surface of the hollow rotor 103 that faces opposite the first linking part 113 in the forward direction.

The second linking part 114 has a spline groove formed on the outer peripheral surface of the switching sleeve 106. The second linking part 114 is capable of meshing with a spline 116 formed on an inner peripheral surface of a cylinder part 153a that protrudes rearward from a rear-side flange 152b, which supports a planetary shaft 152a in the planetary carrier 153.

When the switching sleeve 106 is made to slide to the high-speed mode position 106A on the forward side, the first linking part 113 meshes with the linking teeth of the rear end of the hollow rotor 103, and the output shaft 104 forms a connected state with the hollow rotor 103 via the switching sleeve 106. When the switching sleeve 106 is made to slide to the low-speed mode position 106B on the rear side, the first linking part 113 separates from the linking teeth 115 of the hollow rotor 103, and, instead, the second linking part 114 is linked to the planetary carrier 153 of the planetary gear reduction mechanism 150. As a result, after the rotation of the hollow rotor 103 is reduced via the planetary gear reduction mechanism 150, a low-speed rotation mode is reached wherein [the rotation of the hollow rotor 103] is transmitted to the output shaft 104 via the switching sleeve 106.

In the switchable rotation drive device 101 of an embodiment of the present invention, as described above, sliding the switching sleeve 106 that is linked to the output shaft 104 so as to be capable of sliding and integrally rotating causes the output shaft 4 to be capable of switching between high-speed rotation and low-speed rotation.

Therefore, in comparison with a case in which the entirety of the planetary gear reduction mechanism is made to slide and switch between high-speed rotation and low-speed rotation, the sliding region may be smaller, and as a result, the movement space is also accordingly smaller. It is therefore advantageous to cause compaction and reduce the size of the device.

## Claims

1. A switchable rotation drive device **characterized in** comprising:
a motor provided with a hollow rotor;
an output shaft that coaxially pass through a hollow part of the hollow rotor in a rotatable state;
a planetary gear reduction mechanism for reducing rotation of the hollow rotor and transmitting a resulting rotation to the output shaft;
and a switching mechanism that can slide between a high-speed mode position and a low-speed mode position in a direction of a center axis along an outer peripheral surface of the output shaft, wherein
the switching mechanism has a first connecting sleeve and a second connecting sleeve that is coaxially connected to the first connecting sleeve via a bearing so as to rotatable relative with each other, and a sun gear of the planetary gear reduction mechanism is formed on an outer periphery of the first connecting sleeve, and wherein
in the high-speed mode position, the output shaft and the hollow rotor form a connected state so as to integrally rotate via the first connecting sleeve; and
in the low-speed mode position, the first connecting sleeve and the output shaft are separated, the sun gear formed on the first connecting sleeve is connected to planetary gears of the planetary gear reduction mechanism, the second connecting sleeve is connected to a planetary carrier, which is an element of the planetary gear reduction mechanism for outputting reduced rotation, whereby the rotation of the hollow rotor is reduced via the planetary gear reduction mechanism and transmitted to the output shaft.

2. The switchable rotation drive device according to Claim 1, wherein
the first connecting sleeve is connected to the hollow rotor so as to integrally rotate in a slidable state in a direction of the center axis,
the first connecting sleeve is formed on a circular inner peripheral surface thereof with a first spline groove, and
the output shaft is formed on an outer peripheral surface thereof with a first spline, and wherein
in the high-speed mode position, the first spline groove and the first spline are connected, and in the low-speed mode position, the first spline groove and the first spline are separated.

3. The switchable rotation drive device according to Claim 2, wherein
the second connecting sleeve is connected to the planetary carrier so as to integrally rotate in a state that allows sliding in the direction of the center axis,
the second connecting sleeve is formed on a circular inner peripheral surface thereof with a second spline groove, and
the output shaft is formed on the outer peripheral surface with a second spline, and wherein
in the high-speed mode position, the second spline groove and the second spline are separated; and in the low-speed mode position, the second spline groove and the second spline are connected.

4. The switchable rotation drive device according to Claim 3, wherein
the output shaft is made to protrude rearward from a rear end of the hollow rotor, and
the planetary gears of the planetary gear reduction mechanism are disposed in a state surrounding the output shaft in a position adjacent to a rear side of the rear end of the output shaft, and wherein
in the high-speed mode position, the sun gear of the first connecting sleeve is concealed in the hollow rotor, and in the low-speed mode position, the sun gear is exposed rearward from the rear end of the hollow rotor to thereby mesh with the planetary gears.

5. A switchable rotation drive device **characterized in** comprising:
a motor provided with a hollow rotor;
an output shaft that coaxially enters into a hollow part of the hollow rotor in a rotatable state;
a planetary gear reduction mechanism for reducing rotation of the hollow rotor and transmitting a resulting rotation to the output shaft;
and a switching sleeve that can slide between a high-speed mode position and a low-speed mode position in a direction of a center axis along an outer peripheral surface of the output shaft and that is connected to the output shaft so as to integrally rotate with the output shaft; wherein
a sun gear of the planetary gear reduction mechanism is disposed so as to integrally rotate with the hollow rotor, and
the switching sleeve is provided with a first connecting part connected to the hollow rotor so as to integrally rotate therewith merely in the high-speed mode position; and a second connecting sleeve that is connected to a planetary carrier so as to integrally rotate therewith merely in the low-speed rotation mode position, the planetary carrier being an element of the planetary gear reduction mechanism for outputting reduced rotation.
